# EUROPEAN PATENT APPLICATION

(11) **EP 2 617 293 A1**
(43) Date of publication of application: **24.07.2013**
(21) Application number: 11825083.6
(22) Date of filing: 09.09.2011
(51) Int. Cl.: A23L 1/015, A61K 47/02, A61K 47/10

(54) **BITTERNESS-MASKING INGREDIENT AND BITTERNESS-MASKING METHOD**

(30) Priority: 27.08.2011 JP 2011185374; 06.06.2011 JP 2011125889; 17.02.2011 JP 2011031471; 17.11.2010 JP 2010256611; 16.09.2010 JP 2010207608
(71) Applicant: Yamada, Yasuyuki, Nagoya-shi, Aichi 462-0012 (JP)
(72) Inventor: Yamada, Yasuyuki, Nagoya-shi, Aichi 462-0012 (JP)
(74) Representative: Dowling, Andrew
(86) International application number: PCT/JP2011/070577
(87) International publication number: WO 2012/036080

(57) **Abstract**

Problem: To provide a bitterness-masking agent and method that masks the bitterness of an edible substance containing a pharmaceutical product, food, or drink, whether a fine powder or a whole fruit, safely, cheaply, simply, with anti-bacterial and anti-degenerative properties over the long term even at room temperature and in a hydrated state, without destroying or altering the composition thereof, using an ingredient in use from early times, in order to have the edible substance absorbed by the stomach; and to provide an importation and exportation method for an edible material using same. Solution: To use an edible flocculating agent from an ingredient in use from early times to have an edible substance containing a pharmaceutical product, food or drink be absorbed by the stomach, whether said edible substance is a fine powder or a whole fruit, and to do same safely, cheaply, simply, with anti-bacterial and anti-degenerative properties over the long term even at room temperature and in a hydrated state, without destroying or altering the composition thereof, to provide a bitterness-masking agent and method that do not generate industrial waste, to provide an edible substance containing a pharmaceutical product or food using said method, and to provide an importation and exportation method using same. The present invention enables fresh overseas edible substances to be imported and exported safely, cheaply, readily, and free of disease, even in large volume.

## Description

### TECHNICAL FIELD

This invention relates to the bitterness-masking edible flocculating agent and method, that do not generate industrial waste and that masks the bitterness of an edible substance containing a pharmaceutical product, food, or drink, whether a fine powder or a whole fruit, safely, cheaply, simply, with anti-bacterial and anti-degenerative properties over the long term even at room temperature and in a hydrated state, without destroying or altering the composition thereof, using an ingredient in use from early times, in order to have the edible substance absorbed by the gastrointestines.

Some edible materials, such as pharmaceuticals, food, and drink, are difficult of intake because of their intense flavors. Here the "bitter" means comprehensively such strong taste with broad sense, which is not limited to narrow sense but include astringent, pungent, unpleasant tastes, etc.

### BACKGROUND

Generally, in order to mask bitter tastes, such as pharmaceuticals, dragees or capsules are made. Therefore it remains difficult to mask bitter tastes of powder. In late years, surfactant mixing with fat or wax, and porous absorber was reported in international patent. (For example, cited no. 1 patent)..

In order to mask bitter tastes of food and drink, the following materials were reported as a patent: acidic fractions of bacteria-free culture medium and bacteria extract through ion exchange resin, hydrophilic fraction treated by porous polymer treatment of bacterial extract, and bacterial peptides. (For example, cited no. 2 patent).

Although olives have a lot of nutritious substances such as polyphenols, olives can be eaten only after these nutritious substances have been destroyed because of their terrible bitter. In all over the world, olives must be soaked in dangerous caustic soda which is used for cleaning toilets and sewage or in inedibly highly concentrated brine for several months, and then nutrients such as polyphenols are destroyed before the olives become edible. A recent patent reported that when olives are crushed and mixed with sugar, their bitterness can be reduced and eaten. Bitter can be eaten after mixing with sugar: this is a matter of course. Even with this method, original olive fruit with round shape cannot be masked for the bitterness. (For example, cited no. 3 patent).

### CITED LITERATURE

### PATENT REFERENCES

No.1. JP2005-82594A, JP2004-255861, EP03020053.9
No.2. JP2009-278917A
No.3. JP2010-88392A

### DETAILED DESCRIPTION

### PROBLEMS TO BE SOLVED BY THE INVENTION

As mentioned above, to mask the bitter is very difficult and developers are struggling with the world. In addition, for olives, caustic soda which is inevitably used throughout the world is dangerous. This treatment destroys valuable olive nutrition such as polyphenols etc., original beautiful colors, internal organization, and enemy defense organization, becoming easy to rot by Clostridium botulinum, etc. Incredibly strict management of anti-bacteria for a long time is necessary. This is incredible for ordinary agricultural products. Instead of the destroyed color, artificial coloring such as iron gluconate is added. In addition, good bacteria etc. are destroyed. We, natural organisms, and olives can not only stay healthy by good bacteria such as fermenters but also be sheltered from bad putrefactive bacteria by them. Natural agricultural products such as apples which are not treated by caustic soda can be stored stable for a long time as it is. Quality of oxide acidity of olive oil is severely restricted. Extra-virgin olive oil is recognized only when its acidity is less than 0.8%. When the caustic soda is added to olives, all of the oil can be oxidized up to 100% acidity. This is a detergent soap. After use, it is hard to dispose as industrial waste. Main olive producing areas, such as Mediterranean sea and Seto Inland Sea, are narrow and have high population density. Nevertheless, the areas are only area where the huge amounts of the industrial waste are to be dumped. Even if the industrial waste is limited to the part that is controlled and processed under surveillance, the disposal is hard. The amounts of the nonprocessed industrial waste which are not controlled under surveillance are not imaginable. This has become a big problem for inhabitants and fisheries. Furthermore, the olive fruit and seeds after oil extraction, which are in spite of rich in healthy polyphenols and nutrition, become a huge amount of industrial waste which is hard to process, only because of the too much bitterness in all over the world.

The aim of this invention is to provide the new bitterness-masking edible agent and method, the safety of which has been sufficiently confirmed and used from early times, which do not generate industrial waste, and which masks the bitterness of an edible substance containing a pharmaceutical product, food, or drink, whether a fine powder or a whole fruit, safely, cheaply, simply, with anti-bacterial and anti-degenerative properties over the long term even at room temperature and in a hydrated state, without destroying or altering the composition thereof, using an ingredient in use from early times, in order to have the edible substance absorbed by the gastro-intestines and to retain the pharmaceutical efficacy.

### MEANS TO SOLVE THE PROBLEMS

As a result of intensive studies to solve the above problems, the inventor found that edible flocculants have the effect of masking the bitter taste. Then this invention was made. In addition, the inventor frequently experienced specific coagulation effects in previous studies, such as the following papers.
Yamada, Y.:.. Analytical Biochemistry 164 (1987) 170-174 J Biochem Biophys Methods 7 (1983) 175-185.8 (1983) 175-181.8 (1983) 183-188 Advanced Methoods.Biochemical & Clinical Apparatuses (1983) De Gruiter. Brain Research 142 (1978) 187-190.172 (1979) 165-168. Neuroendocrinology18 (1975) 263-271. Nature 247 (1974) 284-286, Jpn J Alcohol 21 (1986) 128-134.

That is, the present invention is bitter masking agent, which is characterized by an active ingredient having an edible coagulant effect of masking the bitter taste. Further, another aspect of the present invention is a bitterness masking method, which is characterized by the above-mentioned active ingredient.

Here, the flocculation(coagulation), in the present invention, means forming aggregated or compound masses of particles, as shown in dictionaries. Specifically as edible flocculants, some calcium-containing compounds, some alcohols, some acids etc. are exemplified.

It is believed that the highly reactive sites on the molecular surface of bitter attach to the taste buds of the tongue and generate action potentials of bitterness. The present invention was carried out in the following way of thinking. The active site of the molecular surface of the bitter must be highly reactive. If the site is bound and covered with a flocculant molecule or ion which has high reactivity of binding coagulation, the site must become difficult to bind to the taste buds of the tongue. Thus, the bitterness masking agent and method can be developed. The safety of the used material must be traditionally fully confirmed as food. And, after passing through the mouth with the taste buds, the bitter must immediately become free of the binder and return back to the original structure to be absorbed by the body to work as medicine and nutrition. The more highly reactive substance means the more intense bitterness, and the stronger efficacy is made in vivo.

Thus, at the molecular level, the edible flocculants i.e. ethanol and lime were bound and coagulated to the surface of bitter molecules, and action potentials of bitterness were prevented from appearing. When calcium hydroxide was used as lime, carbon dioxide was bound over the flocculant as the further coverage. Thus, the residual calcium hydroxide became stable, and the flocculant surface was covered by carbonate groups. Carbon dioxide exists abundantly in the air and living organisms. I.e., this is the stable bound compound of calcium carbonate which is the component of egg shell and sea shell in the mouth, and in the stomach the calcium carbonate is removed rapidly by gastric acid, and then original useful materials reappear.

Carbon dioxide in the air rapidly starts binding, but for much more rapid binding the carbon dioxide in exhaled breath or in gas cylinder can be applied.

The calcium hydroxide and calcium carbonate of lime, which are traditional edible materials and the flocculant of the present invention, are as is not only used as food, drink, and medicine. But also, when their used wastes are discarded into farmland and sea, they become farmland fertilizers and marine aquatic resources, contributing to the increased production of seaweed and marine life. As a result, shellfish production increases. The sea shell and egg shell are calcium carbonate, become calcium oxide by simple heating, and then become calcium hydroxide with water. This means complete recycling of the earth.

Main olive producing area is an area close to the sea, such as the Mediterranean and the Seto Inland Sea. Thus, the shellfish are harvested in abundance. When shells are heated, binding proteins in the shells are burnt out, and they easily become powder. The lime include calcium oxide, calcium hydroxide, and calcium carbonate.

On the other hand, the lime which is sowed on land becomes fertilizer which plant requires. Finally, the lime flows into the river and the sea, and then they make the recycle of the earth as described above.

Calcium hydroxide has been used since ancient times to the food and drink as follows: Konjac, baby milk, alcoholic beverages, soft drinks, fortification of beverages with vitamin D, sugar refining, lye fish (Fisk, ,root lutefisk), pickles, salt production, corn cuisine, and preserved egg (century egg).

Calcium hydroxide is used as a drug, as follows: Bone regeneration stimulant, dental filler and embrocation, and skin medicine.

Calcium carbonate has been used since ancient times to the food and drink as follows: Calcium supplements, preservatives and color retention agents for organic apples, etc.

Calcium carbonate is used as a drug, as follows: Stomach antacid, hyperphosphatemia remedy, pharmaceutical fillers, and osteoporosis remedy.

### EFFECT OF THE INVENTION

The bitterness masking agent and masking method of the present invention are able to mask bitterness without impairing the original tastes of pharmaceutical products, food, and drink.

Further, the present invention, which provide a bitterness-masking agent and method, has advantages that bitter edible substances containing a pharmaceutical product, food or drink can be absorbed by the stomach, whether said edible substance is a fine powder or a whole fruit, and can be done safely, cheaply, simply, with anti-bacterial and anti-degenerative properties over the long term even at room temperature and in a hydrated state, without destroying or altering the composition thereof, without generating industrial waste.

### BEST MODE

The concentration of calcium hydroxide for food could be even at 100%(w/v), by using the contained water of the object. It could be at 5mg/dl. For olives, which could be pickled more than 2 years as the whole fruit, lower concentrations could be used. Suspension of 5-15% and saturated aqueous solution was convenient to use. Unless otherwise stated, [%] means [w / v%]. Since calcium oxide becomes calcium hydroxide as soon as water is added, the two can be used in the same way.

For the preservation, acid, sugar, and / or alcohol are appropriate. Especially, vinegar, starch syrup( high fructose corn syrup), and / or ethanol are appropriate.

### EMBODIMENT

Followings are embodiment and more detailed explain of this invention, but this invention is not a thing limited to this. Mainly, the object 200mg was put into 1ml of saturated aqueous solution or 5% suspension of calcium hydroxide for food, ground on a mortar, and microscopically checked. Taste sensory test described below was expressed as a percentage change of the impulse frequencies of sensory neurons of the tongue on that the object was placed, before and after the flocculant was added to the bitter.
Yamada, Y.:.. Brain Research 142 (1978) 187-190.172 (1979) 165-168
Neuroendocrinology18 (1975) 263-271 Nature 247 (1974) 284-286, Jpn J Alcohol 21 (1986) 128-134.Analytical Biochemistry 164 (1987) 170-174. J Biochem Biophys Methods 7 (1983) 175-185.8 (1983) 175-181.8 (1983) 183-188. Advanced Methoods.Biochemical & Clinical Apparatuses (1983) De Gruiter.

### EMBODIMENT 1

Powdered Rhei Rhizoma(the bitterest oriental medicine) was used. This particle was 5µm diameter when mixed with water. When mixed with saturated calcium hydroxide solution, the aggregate particle diameter became 50µm and the bitterness became 30%. The particle was dried in the air and was sufficiently adsorbed with carbon dioxide, and resulted in 10% bitterness. By the action of such aggregation, the time-dependent softening of the edible material could be prevented. Therefore, it is very useful. This aggregate easily collapsed when pressed with a finger, therefore the oral sensation did not become worse. When the produced dry powder was taken in, it showed the same laxative effect as original powdered Rhei Rhizoma. Gastric acid easily dissolves and removes calcium carbonate and calcium hydroxide from the Rhei Rhizoma, which then returns to original oriental medicine and works in the body.

### EMBODIMENT 2

Red pepper was used. This particle was 5µm diameter when mixed with water. When mixed with saturated calcium hydroxide solution, the aggregate particle diameter became 50µm and the bitterness became 30%.

### EMBODIMENT 3

Turmeric leaf was used. There were two kinds of particles of 3µm and 20µm diameter when mixed with water after ground on a mortar. When mixed with saturated calcium hydroxide solution, the aggregate particle diameter became 100µm and the bitterness became 10%.

### EMBODIMENT 4

Turmeric calyx was used. This particle was 3µm diameter when mixed with water. When mixed with saturated calcium hydroxide solution, the aggregate particle diameter became 100µm and the bitterness became 10%.

### EMBODIMENT 5

Mustard leaf(Brassica juncea) was used. This particle was 3µm diameter when mixed with water. When mixed with saturated calcium hydroxide solution, the aggregate particle diameter became 10~50µm and the bitterness became 10%.

### EMBODIMENT 6

Viscera of sweetfish(Plecoglossus altivelis) was used. This particle was 10µm diameter when mixed with water. When mixed with saturated calcium hydroxide solution, the aggregate particle diameter became 50µm and the bitterness became 50%.

### EMBODIMENT 7

Green olive was used. This particle was 5µm diameter when mixed with water. When mixed with saturated calcium hydroxide solution, the aggregate particle diameter became 100µm and the bitterness became 10%. These results were the same as black olive, but only black olive had many oil droplets of 10~50µm diameter

### EMBODIMENT 8

Bile of great amberjack(Seriola dumerili) was used. This particle was 10µm diameter when mixed with water. When mixed with saturated calcium hydroxide solution, the aggregate particle diameter became 100µm and the bitterness became 30%.

### EMBODIMENT 9

Kale(borecole) was used. This particle was 5µm diameter when mixed with water. When mixed with saturated calcium hydroxide solution, the aggregate particle diameter became more than 20µm and the bitterness became 10%.

### EMBODIMENT 10

Bitter melon (Momordica charantia) was used. This particle was 5µm diameter when mixed with water. When mixed with saturated calcium hydroxide solution, the aggregate particle diameter became 50µm and the bitterness became 30%. This bitterness became 0% after sliced by 2mm thickness and soaked for 3 days. The slice of 5mm made 20% bitterness.

### EMBODIMENT 11

Carrot leaf was used. There were mixed two kinds of particles of 3µm and 20µm diameter when mixed with water after ground on a mortar. When mixed with 5% calcium hydroxide suspension, the aggregate particle diameter became 50~100µm and the bitterness became 10%. Without crush the original leaf was soaked in 5% suspension of calcium hydroxide. After 5 hours the bitterness became 10%. After 3 days the bitterness was the same 10%. But its elasticity is reduced. It became brittle and fragile.

### EMBODIMENT 12

Olive leaf was used. This particle was 5µm diameter when mixed with water. When mixed with saturated calcium hydroxide solution, the aggregate particle diameter became 50µm and the bitterness became 30%.

### EMBODIMENT 13

Olive branch was used. This could not be crushed in a mortar. Therefore this was crushed in a three-roll mill first, and then mixed with water in a mortar. The particles were 10~100µm diameter. When mixed with saturated calcium hydroxide solution, the aggregate particle diameter became 10~300µm and the bitterness became 30%. These were dried and fully carbonated in air for 12hours. The produced powder had 10% bitterness.

### EMBODIMENT 14

Astringent persimmon was used. This particle was 10µm diameter when mixed with water. When mixed with saturated calcium hydroxide solution, even macroscopically immediately and clearly the particles aggregated. The aggregate particle diameter became 100µm~1mm and the bitterness became 10%.

### EMBODIMENT 15

Calyx of astringent persimmon was used. This could not be crushed in a mortar. Therefore this was crushed in a three-roll mill first, and then mixed with water in a mortar. This particle was 5µm diameter. When mixed with saturated calcium hydroxide solution, even macroscopically immediately and clearly the particles aggregated. The aggregate particle diameter became 100~200µm and the bitterness became 10%.

### EMBODIMENT 16

Leaf of astringent persimmon was used. This could not be crushed in a mortar. Therefore this was crushed in a three-roll mill first, and then mixed with water in a mortar. This particle was 5µm diameter. When mixed with saturated calcium hydroxide solution, even macroscopically immediately and clearly the particles aggregated. The aggregate particle diameter became 100µm and the bitterness became 10%. Without crush the original leaf was soaked in 5% suspension of calcium hydroxide. After 24 hours the bitterness became 10%.

### EMBODIMENT 17

Branch of astringent persimmon was used. This could not be crushed in a mortar. Therefore this was crushed in a three-roll mill first, and then mixed with water in a mortar. The products were particles of 10~100µm diameter and filaments. When mixed with saturated calcium hydroxide solution, the aggregate particle diameter became 30~20µm and the bitterness became 10%. Without crush the original branch was soaked in 5% suspension of calcium hydroxide. After 24 hours the bitterness became 10%.

### EMBODIMENT 18

Powdered Rhei Rhizoma and olive were soaked in 5% aqueous solution or suspension of calcium lactate, calcium citrate, and calcium chloride. They had mild bitterness masking effects but no anti-bacterial anti-degenerative effects and corrupted during storage.

As mentioned above, long-term preservation of edible materials after bitter masking treatment necessitates consideration. The long-term preservation of the edible materials has following problems: (1) corruption, particularly virulent Clostridium botulinum. (2) degeneration, particularly the loss of nutrients such as polyphenols. (3) soured taste. Halophilic Vibrio putrefies the edible materials even in highly concentrated salt. Anaerobic bacteria putrefies them even in no oxygen. Highly concentrated salt makes not only the edible materials too much salty but also damage the health by hypertension, arteriosclerosis, etc. If the salt is washed away by soak in water, the contained flavor and nutrition will be washed away and rotting will quickly happen.

### EMBODIMENT 19

Olive was pitted or numerously stab-wounded on the surface with a pinholder in order to make it easily rot. As useful edible materials for long-term storage, acid, sugar, and/or alcohol are appropriate. Especially, vinegar, starch syrup( high fructose corn syrup), and / or ethanol are appropriate. The above-mentioned wounded olives, which were bitter-masked, were soaked in altered % solutions for 2 days and 7 months and the tastes were checked. The following table shows the results.

**TABLE 1**

| No | vinegar | syrup | ethanol | after 2days | after 7months |
|---|---|---|---|---|---|
| 1 | 0 | 100 | 0 | good | molded |
| 2 | 1 | 98 | 0 | good | good |
| 3 | 45 | 45 | 10 | excellent | excellent |
| 4 | 98 | 1 | 1 | fair | fair |
| 5 | 100 | 0 | 0 | fair | bitter |
| 6 | 0 | 0 | 100 | brittle&flaky | firmly tattered |

Even after two years, No.3 was excellent and delicious to eat. A priori, during the soak in vinegar, masking calcium was removed away and the original bitterness came out in No.5. This is presumptively the same as the Rhei Rhizoma in the stomach of the EMBODIMENT 1: Gastric acid easily dissolves and removes masking calcium from the Rhei Rhizoma, which then returns to original bitter oriental medicine.

### EMBODIMENT 20

When olive was soaked in 5% calcium hydroxide suspension for 10 days, the bitterness became 10%. When half-cut olive and pitted olive were soaked for only 5 days, the bitterness became 10%.When olive surface was wounded of myriad small punctures by a pinholder, and the olive was heated for 3 minutes at 100 degrees Celsius and soaked in 5% calcium hydroxide suspension for 24 hours, the bitterness became10%.

### EMBODIMENT 21

The same as EMBODIMENT 18, the wounded olive was molded, when it was soaked in 100% syrup for 7 months. But original umblemished natural olive showed no mold and no degeneration even after 10 months in the syrup. The taste was of dilute syrup and of only slight bitter. The texture was a little softeer.
[Example 21]
and [0044] as [0045], Olive is scratched, there was mold after seven months dipped in syrup 100%. However, in the olive remains unblemished round, the occurrence of mold and degeneration was not observed even after 10 months. In dilute the syrup taste, the taste was only slightly bitter taste. Texture was a little softer.

### EMBODIMENT 22

Original umblemished natural olive was soaked in olive oil. Mold occurred after 10 months.

### EMBODIMENT 23

In addition, ethanol (ethyl alcohol) was used as another edible flocculant.. Anhydrous ethanol 1ml was added to 200mg of green olives, which was then ground in a mortar. Coagulation occurred and had 100 ~ 200µm diameter, but bitterness did not decrease at all. Then, original umblemished natural black olive was soaked in anhydrous ethanol for 5 days, and the bitterness reduced to 10%. After 9 months of the continued soak, the olive showed strong alcoholic taste, but the same 10% bitterness continued, and the food sensation as a whole was not bad. When olive was wounded as No. 6 of TABLE 1, later the food sensation became bad. Therefore when alcohol is used, careful handling, such as no wound etc., is necessary.

### EMBODIMENT 24

Then lees were used, because lees contain alcohol and generate alcohol. Original umblemished natural black olive was soaked in the lees. The bitterness decreased to 30% after 16 days, 20% after 22 days, and 10% after 25 days. Then both the taste and the food texture were excellent. After 9 months almost all of the bitterness disappeared and both the taste and the food sensation were excellent. The olive bitter did not moved into the lees around the soaked olive at all.

### EMBODIMENT 25

Then the olive was soaked in a composition which is very similar to the lees, i.e. mixture of aspergillus, yeast, and lactobacteria. Until 22 days after, the changes were the same as embodiment 24, but after 9 months mold and corruption occurred.

The above results shows that ethanol etc. are effective components for olive, but not ethanol itself but ethanol-containing materials such as lees showed a higher efficacy.

### EMBODIMENT 26

As shown in EMBODIMENT 21 and 23, unlike the black ripe olives, the green immature olives firmly hold strong bitter even to the center of the fruits. Therefore when green olive is soaked in anhydrous alcohol, even after 5 days, 80% bitterness still remained. At this point, into the alcohol, calcium hydroxide was added up to 5(w/v)%. After 2 days the bitterness decreased to 20%. The olive, which was not added calcium hydroxide to, the bitterness almost did not change even after 2 days. The calcium hydroxide was used even at the concentration of 10% and 20%. The viscosity became higher at 20%. In order to reduce water content, calcium oxide was used at 5%, 10%, and 20%. Slight heat was generated. The viscosity became higher at 20%.

### EMBODIMENT 27

Original natural green olive, which was not treated at all, was soaked in the liquid which contained 45% vinegar, 45% syrup, and 10% ethanol. The bitterness decreased to 80% after 2 days, and 60% after 4 days.

### EMBODIMENT 28

A bitter melon (Momordica charantia) was cut into 3 pieces and soaked in 5% edible flocculant, i.e. calcium hydroxide. The bitterness became 30% after 2 days, and 20% after 4 days.

### EMBODIMENT 29

A bitter melon was cut into 3 pieces and soaked in edible flocculant, i.e. anhydrous ethanol. The bitterness became 30% after 2 days, and 10% after 4 days.

### EMBODIMENT 30

A bitter melon was cut into 3 pieces and soaked in mixture liquid which contained 10% ethanol as edible flocculant, 45% vinegar as edible flocculant, and 45% syrup. The bitterness became 10% after 2 days, and almost 0% after 4 days.

### EMBODIMENT 31

A bitter melon was cut into 3 pieces and soaked in mixture liquid which contained 50% vinegar as edible flocculant, and 50% syrup. The bitterness became 10% after 2 days, and almost 0% after 4 days.

### EMBODIMENT 32

A bitter melon was cut into 3 pieces and soaked in lees. The bitterness decreased to 30% after 2 days. After 2 months, this became delicious with almost no bitterness and had good food texture and color.

### EMBODIMENT 33

Generally for fruits, more ripe means more delicious. But when ripe olive is soaked in caustic soda or in salt, as the only possible methods until today to remove the bitter from olive, the ripe body collapses. But by the present invention, the ripe body never collapses and it holds solid form.

### EMBODIMENT 34

The present method could be used for powder, crushed materials, and original natural fruits, etc. Even olive seeds (nuts), which are generally inedible, became delicious. At first olive seeds were threshed and mixed in the mixture liquid which had vinegar 45%, syrup 45%, and ethanol 10%. The seed skin sank, and the embryo and endosperm floated on the surface. Also when crushed pulp, after lime treatment, mixed in the mixture liquid, it became delicious and wine-like liquid.

### EMBODIMENT 35

When pitted olive was after the lime treatment soaked in the mixture liquid which had vinegar 45%, syrup 45%, and ethanol 10%, this became similar to red wine. When pitted olive was after the lime-ethanol treatment soaked in the mixture liquid which had vinegar 45%, syrup 45%, and ethanol 10%, this became similar to green wine. Both were delicious. By the treatments, other than those described herein, all the products became similar to brown wine. After the caustic soda treatment, polyphenols and nutrients were destructed and extinguished, and any color did not appear at all. The green described herein was much more dark green as compared to the green which was extracted from green olive by anhydrous ethanol.

### EMBODIMENT 36

At present, the olive products have very short shelf life. And food poisoning, such as Clostridium botulinum, happens all over the world. But by the method of the present invention, they are stable for a long time and almost indefinitely. By the caustic soda method, i.e. currently being used, ripe olives are bleached miserably, and need synthetic colorants such as iron gluconate. But the method of the present invention retains the original olive colors: purple, brown, red, green, and black.

### EMBODIMENT 37

As described above, the bitter-masked olives are different from the olives which are pickled with caustic soda and salt. Because the olives are sweet and have almost indefinite shelf life, these could be used in various sweets etc.: i.e. the olives are put into chocolate to make chocolate bonbons, and into ice cream to make wine-olive ice cream, etc. The soaked liquids become delicious olive wines which have a variety of original beautiful colors without coloring.

### EMBODIMENT 38

The necessary times were measured to halve the bitterness under the following conditions: original natural green olive soaked in 4.2% brewed vinegar for 4 days. original natural green olive soaked in anhydrous ethanol for 5 days. Pitted green olive soaked in the mixture liquid which had vinegar 45%, syrup 45%, and ethanol 10% for 24 hours.

### EMBODIMENT 39

The dirt and water could be removed from the used ethanol, which were then filtered for reuse.

### EMBODIMENT 40

Weak vibration and movement could be effectively and usefully added in order to diffuse throughout the lime aqueous suspension and lime ethanol suspension. Ultrasound could be effectively used at 1.7 MHz, from 200ml to 5 L, and from 4 VA to 75 VA.

About the safety of lime and vinegar, the following medical article was reported in the leading U.S. magazine which is must-read for our U.S.MD: Calcium carbonate and acetate are the most commonly used binders for patients with kidney failure in contemporary practice worldwide. New Engl J Med 362:1312-1324,2010.

### EMBODIMENT 41

The bitterness changes of black olives when heated.

| Boiling time | whole olive | half-cut olive |
|---|---|---|
| 10sec | 100% | 90% |
| 30sec | 90% | 80% |
| 1min | 90% | 70% |
| 3min | 90% | 70% |
| 10mm | 90% | 70% |

### EMBODIMENT 42

The bitterness and texture changes of black olives when much more heated
250 °C x 20sec 90% soft
593 °C x 10sec 90% hard

### EMBODIMENT 43

When black olives were frozen and stored at -20°C for 24 hours and 1 year, both olives did not show any bitterness change.

### EMBODIMENT 44

Temperature changes did not significantly affect the bitterness as shown in the EMBODIMENT 41 to 43. But when olives were pitted or numerously stab-wounded on the surface with a pinholder, boiled for 10 seconds, and soaked in 10% calcium hydroxide water, after 24 hours the bitterness completely disappeared.

### EMBODIMENT 45

The thresholds of the physiological taste-bud stimulations were measured. With the brewed vinegar of 10% acidity, the threshold was 0.1%. This means that the 0.01% acidity was the threshold. This value becomes lowest perceptible concentration of the acid. The acidity is the value when various acids are converted to acetic acid. Here the acetic acid was only an example, and the acids described here encompass various acids. This is the same as for sugars, and the sugars described here encompass various sugars. The threshold of the high fructose corn syrup was 1%.

### EMBODIMENT 46

The threshold of edible flocculant ethanol was 4% on the taste bud, as measured as EMBODIMENT 45. But on the dendrite of physiological Purkinje cell, the ethanol threshold was 0.04%, i.e.8.7mM. The present inventor reported this as shown previously in the Journal. The Effects of Different Concentrations of Directly-applied Ethanol on the Purkinje cell in vitro. Jpn J Alcohol 21 (1986) 128-134.

Water in the limestone is safe and useful as a water source. This has been proven from time immemorial, such as in Yucatan Peninsula.

When carbon dioxide is added after the calcium hydroxide treatment, remaining calcium hydroxide becomes calcium carbonate. Calcium carbonate is stable and safe as shells and egg shells. Added carbon dioxide is not restricted to this structure, but also any kinds of carbonate compounds are effectively used, e.g. carbonic acid, sodium bicarbonate, sodium carbonate, etc. Therefore all of these are included as carbonates here. For example, as shown in the Claim.

### EMBODIMENT 47

The sodium bicarbonate, as one of the above-mentioned carbonate compounds was mixed with calcium hydroxide. The mixed ratio was the equivalent ratio, i.e. 84.0 : 74.1, and the produced suspension had the composition of each substance 4.2% and 3.7%. When olives were soaked in this suspension, the bitterness disappeared completely after 14 hours. By changing the mixing ratios, the pH could be changed and the speed of the bitterness removal could be changed.

### EMBODIMENT 48

By the above-described various processing methods and/or by adding Mg, Cu, salts, bittern, etc., the colors and the hardness could be changed. As the olive colors, green, black, brown, red, yellow, white, etc. Therefore, in olive coloring, such as iron gluconate was unnecessary. Olive polyphenol concentration after the masking was 40mg/dl : measured by Fermentation and Food Research Institute of Kagawa Prefecture. As well as red wine, olive polyphenols is a dark purple red under acidic conditions. Even at pH6~5, where the tongue is hard to detect acidic, the color was this same color. Therefore the olive red wine, which is not acidic, can be made.

### EMBODIMENT 49

Incredible deliciousness was discovered when the lees of Japanese culture were added to the olives of Western culture. By this procedure corruption and degeneration will never happen forever. Lees were also delicious when packed in like stuffed olives. Here, including the claims, the lees include all lees and dregs of all alcohols, of all alcoholic beverages, of Mirin, of Shochu, etc.

With any edible flocculants raised until now, an edible substance containing a pharmaceutical product, food or drink, which was even a whole fruit, could be stored safely, cheaply, simply, with anti-bacterial and anti-degenerative properties over the long term even at room temperature and in a hydrated state, without destroying or altering the composition thereof. Therefore now the chocolate bonbon has been able to be made, which until now could not be made because of short shelf life of olives. Similarly being wrapped with jelly, candy, caramel, and Daifukumochi, the wrapped confectionaries of olives etc. were made. The wrapped edible materials are not limited to olive and bitter melon. The rapping edible materials are also not limited to the above-listed ones. Of course all of these are included in the edible materials of the Claims.

As described in EMBODIMENT 41-44, the fruits were stable for the hot and cold temperature changes. Particularly the edible flocculants strengthen the molecular structures and highly stabilize the fruite. Overheat aggregates edible molecules esp. proteins. Generally freeze aggregates edible molecules. Particularly these aggregation effects are useful anti-bacterial and anti-degenerative properties during transport.

### EMBODIMENT 50

As different from quick freezing, ordinal freezing softens foods such as olive, etc. after the thaw. When these are then soaked into caustic soda, these become much softer, and it will be difficult to keep the original shape. However the present reported method changes the soft thawed frozen fruits into the same firmly solid fruits as the fresh ones. When freezing and thawing are repeated on olives, red dye comes out of the surface. But this was prevented when they were soaked in the above-mentioned edible flocculant, i.e. calcium hydroxide.

For the disinfection of foot-and-mouth disease, which is a major problem in the world, the calcium hydroxide is used exclusively. This is also the same against avian influenza.

Therefore, the above-mentioned edible flocculant was found to be useful at the quarantine of import and export of fresh foreign foods, the same as at the treatment of heat and freeze. This not only prevents the corruption and degeneration, but also solidifies the softened materials. Especially lime can be removed easily and safely: e.g. this can be washed away with the acids of very low concentrations. These can be adapted to the situation of distant transportation of the edible materials: i.e. fresh foreign edible materials , even if large amount, can be imported and exported safely, cheaply, and simply at the quarantine.

The calcium which is mentioned here is not only narrowly restricted to calcium only, but also widely includes any calcium-containing substances. The acids which are mentioned here are not only narrowly restricted to acidic single substance and/or mixture, but also widely include any acidic substances and/or the substances which can be acidic, such as lemon (the content of citric acid is 2%), plum (the content of citric acid is 30%), etc. The sugar which is mentioned here is not only narrowly restricted to single sugar substance and/or mixture, such as sugar, syrup, etc., but also widely includes any sweet substances and/or the substances which can be sweet.

The administration methods of the substances described herein, are not only limited to post-harvest, but also encompass pre-harvest. For example, these are not limited to partial spray (pre-harvest spray), paint, soak, etc., but also the application methods on all over the surface of the body, into the digestive organs, and around the roots.

### EMBODIMENT 51

The bitterness-masking method and storing method are not limited to the method from the surface of the edible materials. For example, the masking agents and preservatives can be injected into the bitter melon. This method makes the treated bitter melon look as if natural fresh from the surface. This has natural appearance and can be stored for a long time. This can be done at either pre- or post-harvest. When the melon was injected at natural pre-harvest situation, the injection trace disappeared after 2 days, and the surface rapidly discolored as compared with post-harvest injection, showing apoptotic change.

### EMBODIMENT 52

Masking preservatives were injected into the bitter melon with 40~50% ml/g volume / bitter melon weight. Sushi vinegar 35~70v/v%, honey 10~50v/v%, and ethanol 5~10v/v% were effective. Especially, 45 v/v%, 45 v/v%, and 10 v/v% respectively were effective. Then the whole melon was lyophilized, becoming stable for a long time.

### EMBODIMENT 53

The beautiful, delicious, and wine-red polyphenols came out of the masked olives. In alcohol they became olive wine, and in a mixer they became olive juice. Also the bitter melon became bitter melon wine and bitter melon juice. The tastes could be freely regulated with added aqueous materials. Olive fruit vinegar became beautiful wine-red color. By these methods, variety kinds of polyphenol solutions can be made.

### EMBODIMENT 54

Olives were soaked in 15% calcium hydroxide suspension for 1 month at room temperature. There was no corruption and no degeneration. The olives became hard.

The flocculation(coagulation) means forming aggregated or compound masses of particles, as shown in dictionaries. Not only aggregation of grains and aggregation of fibers, but also aggregation of grains and fibers and aggregation of grains around fibers are included. Exactly this is the similar aggregation as the reinforced concrete is made of the aggregation of cement and rebar. In this way, coagulation often make better stability and storage. In other words, the flocculant can also be used as a preservative.

### INDUSTRIAL APPLICABILITY

The present invention is useful for the industries of pharmaceuticals, food, beverage, etc. which contain bitter ingredients. This is the bitterness-masking agent and method that masks the bitterness of an edible substance containing a pharmaceutical product, food, or drink, whether a fine powder or a whole fruit, safely, cheaply, simply, with anti-bacterial and anti-degenerative properties over the long term even at room temperature and in a hydrated state, without destroying or altering the composition thereof, using an ingredient in use from early times, in order to have the edible substance absorbed by the stomach. The present invention enables fresh overseas edible substances to be imported and exported safely, cheaply, readily, and free of disease, even in large volume.

## Claims

1. A bitterness-masking agent, which has the edible flocculant having bitterness-masking effect on edible material as an effective component.

2. The bitterness-masking agent according to claim 1, wherein said edible flocculant is calcium and/or calcium-containing substance as a main component.

3. The bitterness-masking agent according to claim 1 or 2, wherein said edible flocculant is lime as a main component.

4. The bitterness-masking agent according to claim 1, 2, or 3, wherein said edible flocculant is ethanol-containing lees as a main component.

5. The bitterness-masking agent according to claim 1, 2, 3, or 4, wherein said edible flocculant is edible flocculant ethanol, edible flocculant acid, and sugar as effective components.

6. The bitterness-masking agent according to claim 1, 2, 3, 4, or 5, wherein said bitterness-masking agent is for olive.

7. The bitterness-masking agent according to claim 1, 2, 3, 4, or 5, wherein said bitterness-masking agent is for bitter melon.

8. The bitterness-masking agent according to claim 1, 2, 3, 4, 5, 6, or 7, wherein said bitterness-masking agent has a preservative effect on edible material.

9. The bitterness-masking method according to claim 1, 2, 3, 4, 5, 6, 7, or 8, wherein said bitterness-masking agent is used.

10. The bitterness-masking method according to claim 9, wherein said bitterness-masking agent is injected into an edible material.

11. The bitterness-masking method according to claim 2, or 3, wherein treatment with said bitterness-masking agent is added with carbonate treatment.

12. The bitterness-masking method according to claim 9, 10, or 11, wherein said edible bitterness-masking has a character to improve storage stability of the edible material.

13. The edible material manufacturing method according to claim 1, 2, 3, 4, 5, 6, 7, or 8, wherein said bitterness-masking agent, and/or according to claim 9, 10, 11, or 12, wherein said bitterness-masking method is used.

14. The edible material manufacturing method according to claim 13, wherein said edible material is wine, juice, vinegar, polyphenol liquid, or wrapped confectionary.

15. The edible material according to claim 1, 2, 3, 4, 5, 6, 7, or 8, wherein said bitterness-masking agent is contained, and/or according to claim 9, 10, 11, 12, 13, or 14, wherein said method is used for manufacturing.

16. The importation and exportation method of the edible material according to claim 1, 2, 3, 4, 5, 6, 7, or 8, wherein said bitterness-masking agent is used, and/or according to claim 9, 10, 11, or 12, wherein said bitterness-masking method is used.
